# EUROPEAN PATENT APPLICATION

(11) **EP 4 614 699 A1**
(43) Date of publication of application: **10.09.2025**
(21) Application number: 24210363.8
(22) Date of filing: 01.11.2024
(51) Int. Cl.: H01M 50/213, H01M 50/291

(54) **BATTERY PACK**

(30) Priority: 05.03.2024 KR 20240031524
(71) Applicant: Samsung SDI Co., Ltd., Gyeonggi-do 17084 (KR)
(72) Inventor: Park, Sanghun, Yongin-si, Gyeonggi-do 17084 (KR)
(74) Representative: Gulde & Partner

(57) **Abstract**

Provided is a battery pack including a housing and a battery module inside the housing, wherein the housing includes a housing protrusion in the housing and housing ribs extending in different directions from each other from the housing protrusion, and wherein the housing ribs formed in any one housing protrusion may be apart from each other along a circumferential direction of the housing protrusion.

## Description

### BACKGROUND

### 1. Field

One or more embodiments relate to a battery pack.

### 2. Description of the Related Art

Secondary batteries are designed to be charged and discharged and may be used as an energy source in a mobile device, an electric vehicle, a hybrid vehicle, an electric bicycle, an uninterruptible power supply, etc. Depending on the types of external devices to which the secondary batteries are connected, the secondary batteries may be used in the form of a single battery cell or in the form of a module or pack in which a plurality of battery cells are collected as one unit.

The information described in the background art is only to improve the understanding of the background art of the present invention, and thus, may include information that is not included in the prior art.

### SUMMARY

The present invention is set out in the appended set of claims, wherein the drawings and respective description relate to advantageous embodiments thereof.

The present invention relates to various embodiments of a battery pack in which the durability and reliability of the battery pack may be improved by distributing a load of a battery module and enhancing a rigidity of a rib supporting the battery module.

However, the technical problem to be solved by the present invention is not limited to the above and other problems that are not mentioned above may be clearly understood by one of ordinary skill in the art from the detailed description below.

Additional aspects will be set forth in part in the description which follows and, in part, will be apparent from the description, or may be learned by practice of the presented embodiments of the present invention.

According to the present invention, a battery pack includes a housing and a battery module accommodated in the housing. The housing includes a housing protrusion at the housing and housing ribs extending in different directions from each other from the housing protrusion. The housing ribs at the housing protrusion may be apart from each other along a circumferential direction of the housing protrusion.

The housing may include a first housing surface including a bottom surface of the housing and a second housing surface extending along an edge of the first housing surface in a height direction. Each of the housing ribs may be connected to the second housing surface.

Each of the housing ribs extending from the housing protrusion may be connected to another adjacent housing protrusion.

The housing protrusion may have a hollow cylindrical shape and may be connected to at least a portion of a bottom surface of the battery module.

The battery module may include a first coupling protrusion on the bottom surface of the battery module and the first coupling protrusion may be inserted into the housing protrusion.

The housing protrusion may include a first housing boss and the first coupling protrusion may be inserted into the first housing boss.

The housing may include a first fastening hole in a bottom surface of the housing and the battery module may include a second fastening hole in the bottom surface of the battery module.

The housing protrusion may include a second housing boss and the second fastening hole may be inserted into a third housing boss.

The housing protrusion may include a first housing boss, a second housing boss, and a third housing boss.

The first housing boss and the third housing boss may be inserted into the battery module and the second housing boss may be apart from a bottom surface of the battery module.

The second housing boss may be in a center portion of the housing in a width direction of the housing.

The third housing boss may include third housing bosses and the third housing bosses may correspond to a longitudinal side of the battery module.

The first housing boss corresponding to the battery module may be inside a first area partitioned by third housing bosses corresponding to the battery module and the housing ribs may connect the third housing bosses together.

The first housing boss may include first housing bosses and the first housing bosses may correspond to a center portion of the battery module.

The battery module may include two or more battery modules and the second housing boss may include second housing bosses.

The second housing bosses may be in a second area partitioned by the third housing bosses corresponding to an outer longitudinal side of one battery module, the third housing bosses may correspond to an outer longitudinal side of another battery module, and the housing ribs may connect the third housing bosses together.

The first area may include first areas and the second area may be between the first areas and may be in contact with each of the first areas.

The housing rib may include a first housing rib extending in a horizontal direction, a second housing rib extending in a vertical direction, and a third housing rib extending in a diagonal direction between the first housing rib and the second housing rib.

The first housing rib, the second housing rib, and the third housing rib may be connected to the second housing surface.

A height of the housing ribs may be less than a height of the housing protrusion.

### BRIEF DESCRIPTION OF THE DRAWINGS

The above and other aspects, features, and advantages of certain embodiments of the present invention will be more apparent from the following description taken in conjunction with the accompanying drawings, in which:

The accompanying drawings are for illustrating example embodiments and provide understanding of the technical concept of the present invention together with the detailed description described below. The present disclosure is not construed as limited to the details of the description of the drawings.
FIG. 1 is a perspective view of a battery pack;
FIG. 2 is an exploded view of a battery pack;
FIG. 3 shows an inside of a housing;
FIG. 4 shows an enlarged portion of FIG. 3;
FIG. 5 is a plan view of FIG. 4;
FIG. 6 is a cross section of FIG. 3 taken along line VI-VI';
FIG. 7 is a cross section of FIG. 3 taken along line VII-VII';
FIG. 8 shows another enlarged portion of FIG. 3;
FIG. 9 shows a state in which a battery module is coupled to a housing;
FIG. 10 shows another enlarged portion of FIG. 3;
FIG. 11 is a plan view of FIG. 10;
FIG. 12 shows an inner cover and a battery module;
FIG. 13 is an inner surface of an inner cover; and
FIG. 14 shows an enlarged portion of FIG. 13.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Some embodiments and methods therefor in the present disclosure may be understood by referring to the detailed descriptions and drawings of the embodiment. The embodiments described have a variety of modifications, may be implemented in different forms, and are not limited to the embodiments described herein. The features of the various embodiments may be combined in part or in whole with each other. The embodiments each may be implemented independently or in relation to each other. The described embodiments are provided as examples to ensure that the present invention is and becomes complete and to completely convey the idea of the present invention to those of ordinary skill in the art to which the present invention belongs.

Unless separately mentioned otherwise throughout the accompanying drawings and specification, the same reference number, character, or a combination thereof indicates the same component, and thus, overlapping descriptions are omitted. Parts that are irrelevant to the description are omitted to clearly describe the present invention.

The relative size of the elements, layers, and areas in the drawing may be exaggerated for clarity. The use of hatching and/or shades in the accompanying drawings may be provided generally to clarify the boundaries between adjacent elements. Therefore, the presence of hatching or shades do not represent certain materials, material characteristics, dimensions, rates, commonalities between drawing elements, and/or other characteristics of an unspecified element, properties, appropriate forms or requirements for properties, etc.

Various embodiments are described herein with reference to the cross-sectional examples, which are schematic examples of embodiments and/or intermediate structures. Thus, for example, the shape of the drawing may be changed as a result of manufacturing technology and/or tolerance. The specific structural or functional explanations in the present disclosure are only examples for explaining embodiments according to the concept of the present invention. Therefore, the embodiments disclosed herein should not be construed as being limited to a shape of an illustrated area and may include, for example, deviations in shape due to manufacturing.

The area shown in the drawing may be essentially schematic and the shape of the area is not intended to illustrate the actual shape of the device area nor limit the area. As recognized by one of ordinary skill in the art, the described embodiments may be modified in various ways within the limit of the idea or scope of the present invention.

Many specific details are provided for a complete understanding of various embodiments in the present invention. However, various embodiments may be implemented without the specific details or with one or more of the specific details. In some embodiments, well-known structures and devices may be illustrated in the form of block diagrams to avoid unnecessary ambiguity in various embodiments.

As shown in the drawing, to make it easier to explain the relationship between one element or feature and other elements or features, spatially relative terms such as "below," "above," "lower," "upper", etc. may be used. Spatially relative terms are intended to include various directions of devices in use or in operation, in addition to the directions illustrated in the drawing. For example, if the device in the drawing is turned upside down, elements or features described as being "below" or "lower" may be "above" other elements or features. Therefore, as an exemplary term, "below" and "lower" may include both upward and downward directions. The device may face another direction (e.g., a direction rotated by 90 degrees or another direction) and the spatially relative explanation used herein should be construed accordingly. Similarly, if a first portion is disposed "above" a second portion, this means that the first portion is disposed at the upper side or lower side of the second portion.

The expression "viewed in a plane" refers to viewing an object from above and the expression "in a schematic cross-sectional view" refers to vertically cutting the object portion to obtain a schematic cross-section. The term "viewed from the side" refers to a first object being above, below, or on the side of a second object and vice versa. The term "overlapping" may include the meaning of a layer, layering, surface, extension, covering, partial covering, or any other appropriate term that is or may be understood by one of ordinary skill in the art. The expression "not overlapping" may include the meaning of "apart from ~" and other appropriate equivalents that may be recognized and understood by one of ordinary skill in the art. The term "surface" may mean that a first object may directly or indirectly face a second object. If there is a third object between the first object and the second object, the first object and the second object may be understood as facing each other, but as indirectly facing each other.

If an element, layer, region, or component is referred to as being "formed in," "connected to," or "coupled to" another element, the element, layer, region, or component, the element, layer, region, or component may be directly formed in, indirectly formed in, connected to, or coupled to another element, layer, region, or component. The above terms may collectively refer to direct or indirect coupling or connection and integral and non-integral coupling or connection of elements, layers, areas, or components such that one or more elements, layers, regions, or components are present. For example, if elements, layers, areas, or components are referred to as "electrically connected" or "electrically coupled" to other elements, layers, areas, or components, the elements, layers, areas, or components may be directly electrically connected or coupled to the other elements, layers, areas, or components or intervening elements, layers, areas, or components may be present. However, "direct connection" or "direct coupling" may refer to one component being directly connected or coupled to other components without intermediate components. If a portion of a layer, film, area, guide plate, etc. is formed on another portion, the formation direction is not limited to an upper direction and the portion may be formed on the side or a lower portion. In some embodiments, if a portion of the layer, film, area, guide plate, etc. are formed in the "bottom" of another portion, the portion may not only be "right below" the other portion but another portion may be between the portion and the other portion. In some embodiments, other expressions that describe the relationship between the components, such as "between," "right in between," "adjacent to -," or "directly adjacent to" may be construed similarly. If the element or layer is mentioned as being "between" two elements or layers, the element may be the only element between the two elements or layers or another element may be between the two elements or layers.

For the purpose of the present invention, expressions such as "at least one" or "any one" do not limit the order of individual elements. For example, "at least one of X, Y, and Z," "at least one of X, Y, or Z," and "at least one selected from a group including X, Y, and Z" may include X alone, Y alone, Z alone, and any combination of at least two of X, Y, and Z. Similarly, expressions such as "at least one of A and B" and "at least one of A or B" may include A, B, or A and B. The term "and/or" herein generally includes all combinations of one or more in a list of related items. For example, expressions such as "A and/or B" may include A, B, or A and B.

Terms such as "first," "second," "third," etc. may be used to explain various elements, components, areas, layers, and/or cross sections, but these elements, components, areas, layers, and/or cross sections are not limited by these terms. The terms are used to distinguish one element, component, area, layer, or cross section from other elements, components, areas, layers, or cross sections. Thus, a first element, a first component, a first area, a first layer, or a first cross section described below may be referred to as a second element, a second component, a second area, a second layer, or a second cross section within the concept and scope of the present invention. Describing an element as a "first" element may not require or suggest the presence of a second element or other elements. Terms such as "first," "second," etc. may be used herein to distinguish different categories or element sets. For clear description, terms such as "first," "second," etc. may represent "a first category (or first set)," and "a second category (or second set)," respectively.

The terms used herein are used to describe certain embodiments and are not intended to limit the present invention. As used herein, singular forms are intended to include plural forms and plural forms are intended to include singular forms unless clearly described otherwise in context. The terms "including," "provided with," and "having" refer to specifying the presence of features, integers, and steps that are used herein. The terms do not exclude the presence or addition of one or more other functions, steps, operations, components and/or a group thereof.

If one or more embodiments may be implemented differently, a specific process order may be performed differently from the described order. For example, two consecutively described processes may be performed substantially at the same time or performed in an order opposite to the described order.

The terms "substantially," "about," "approximately," and similar terms are used as approximations rather than as terms of degree and refer to satisfying an inherent deviation (e.g., a deviation scope caused by limitations of a measurement system) scope of measured or calculated values. For example, "about" may refer to a range within one or more standard deviations or within ± 30 %, 20 %, 10 %, and 5 % of specified values.

Unless defined otherwise, all terms used herein, including technical or scientific terms, have the same meaning as commonly understood by one of ordinary skill in the technical field to which the present invention belongs. General terms such as terms that are previously defined in the dictionary are to be construed as having meanings that match the related technology and/or context of the specification and, unless defined explicitly, are not construed as having ideal or overly formal meanings.

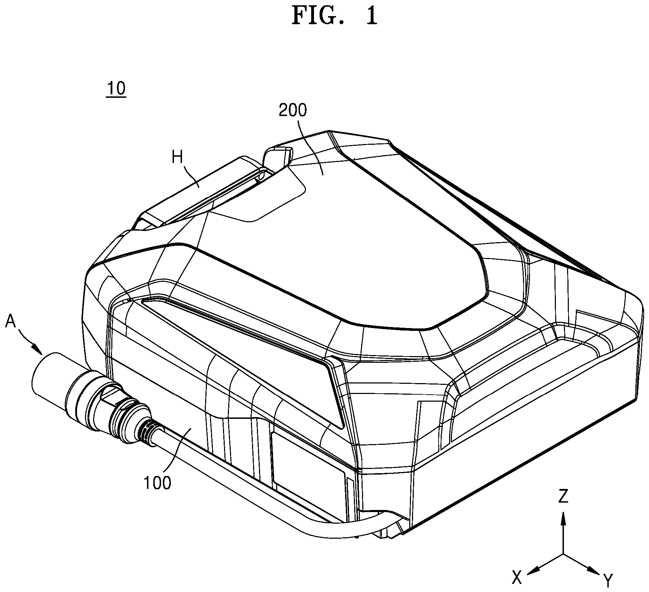

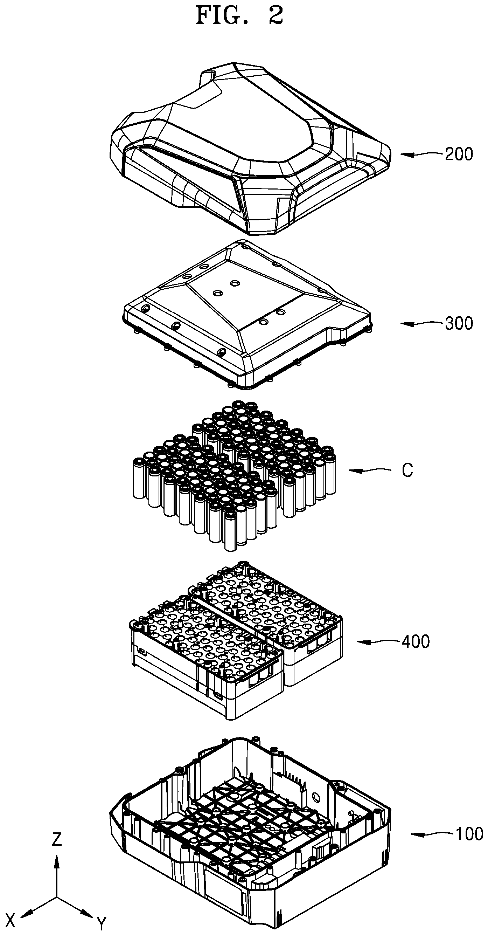

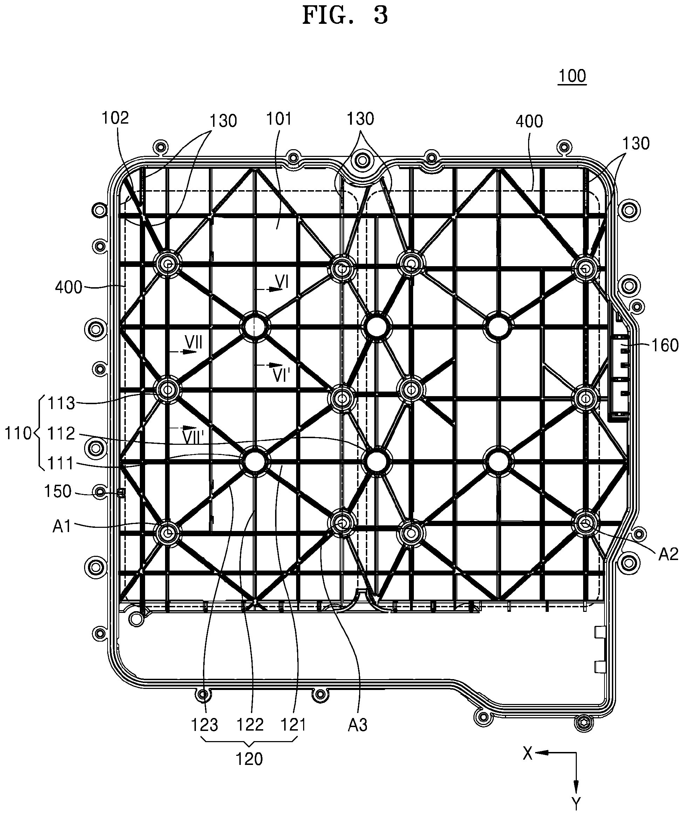

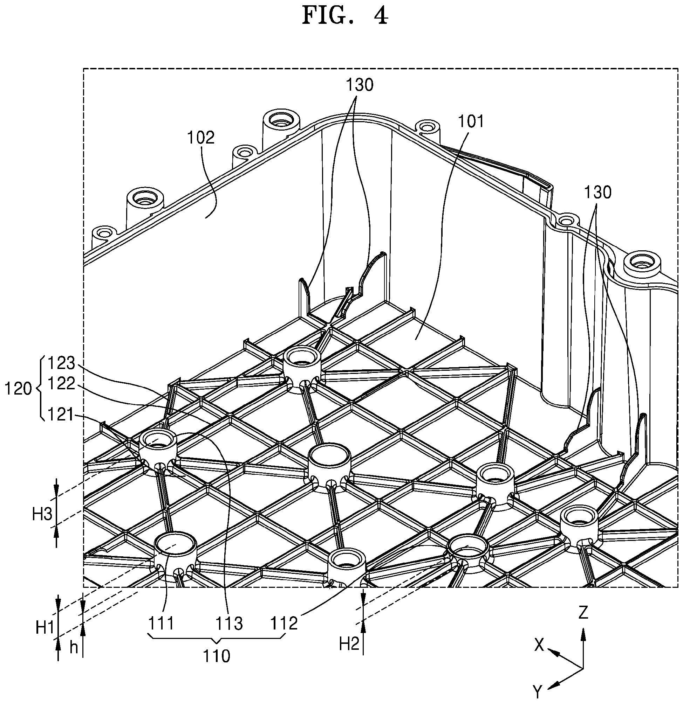

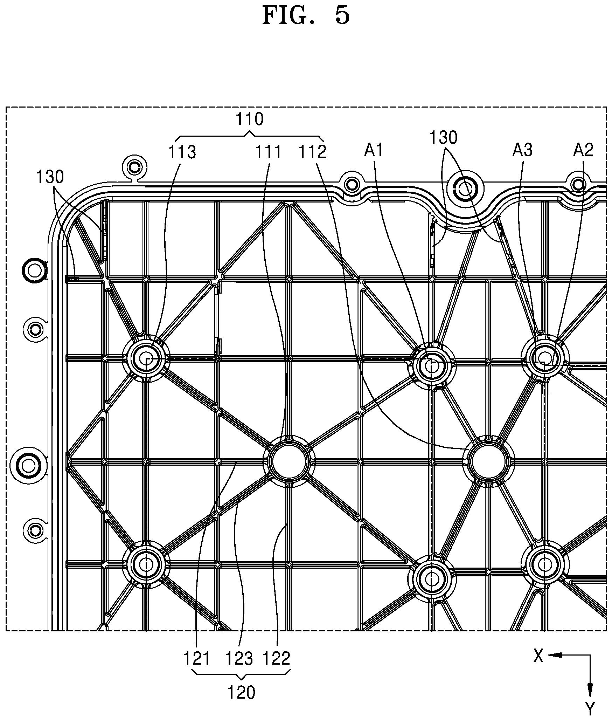

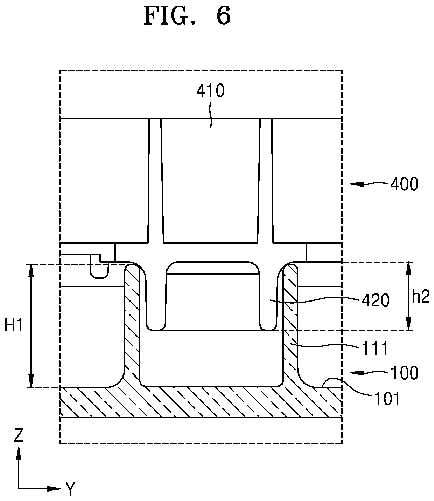

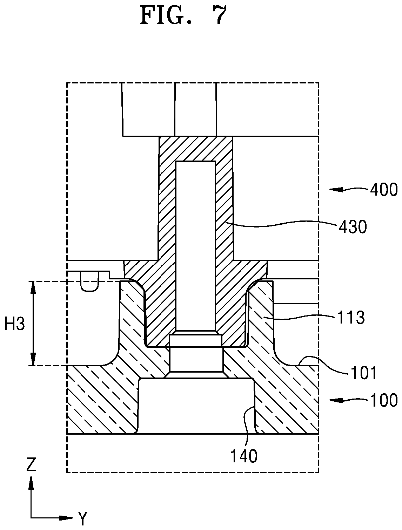

FIG. 1 is a perspective view of a battery pack 10, FIG. 2 is an exploded view of the battery pack 10, FIG. 3 shows the inside of a housing 100, and FIG. 4 shows an enlarged portion of FIG. 3. FIG. 4 shows an enlarged upper left corner portion of FIG. 3. FIG. 5 is a plan view of FIG. 4, FIG. 6 is a cross section of the housing 100 of FIG. 3 taken along cross-sectional line VI-VI', and FIG. 7 is a cross-section of the housing 100 of FIG. 3 taken along cross-sectional line VII-VII'. FIG. 6 shows a cross section of the housing 100 and a battery module 400 that are coupled to each other.

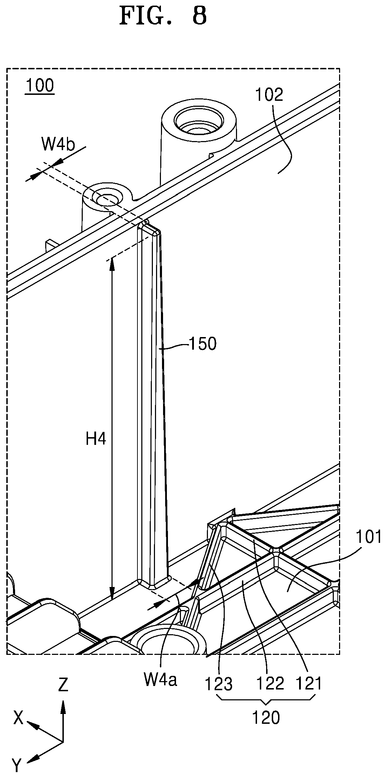

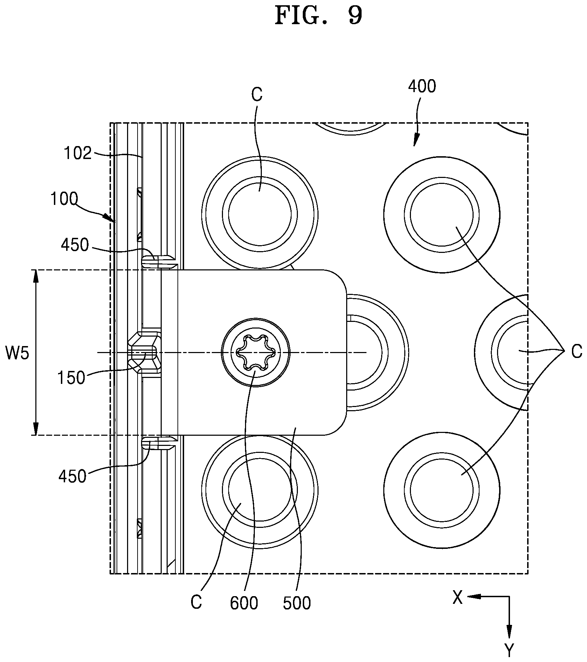

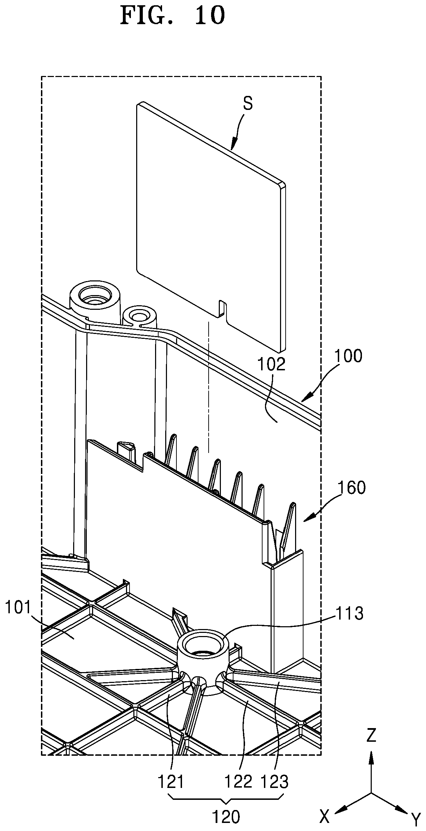

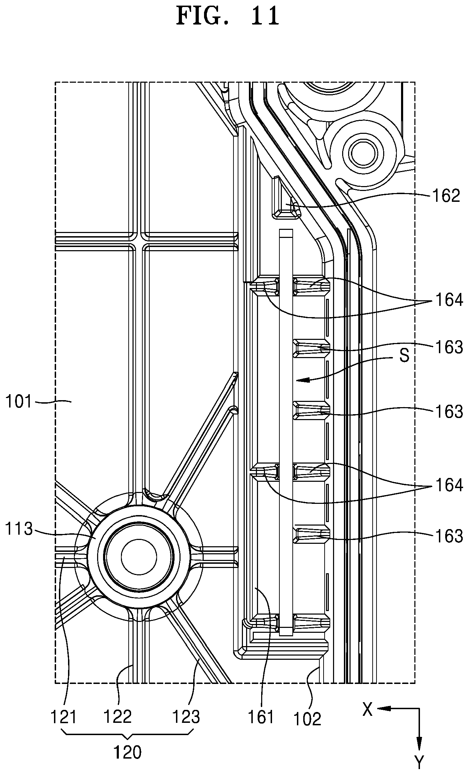

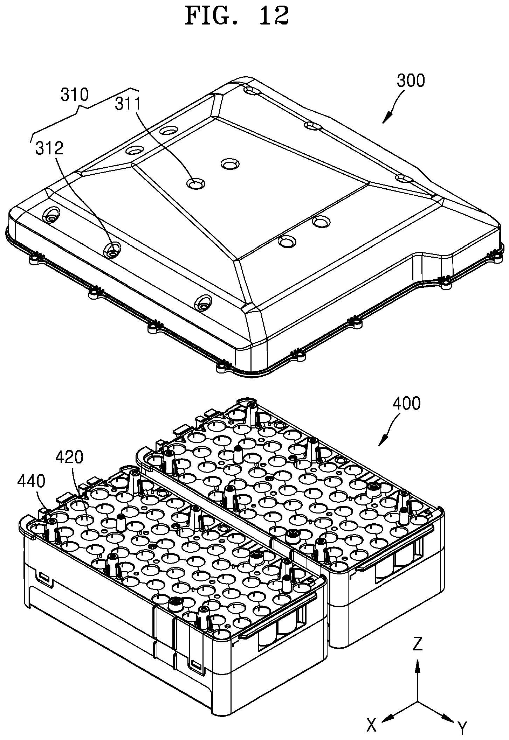

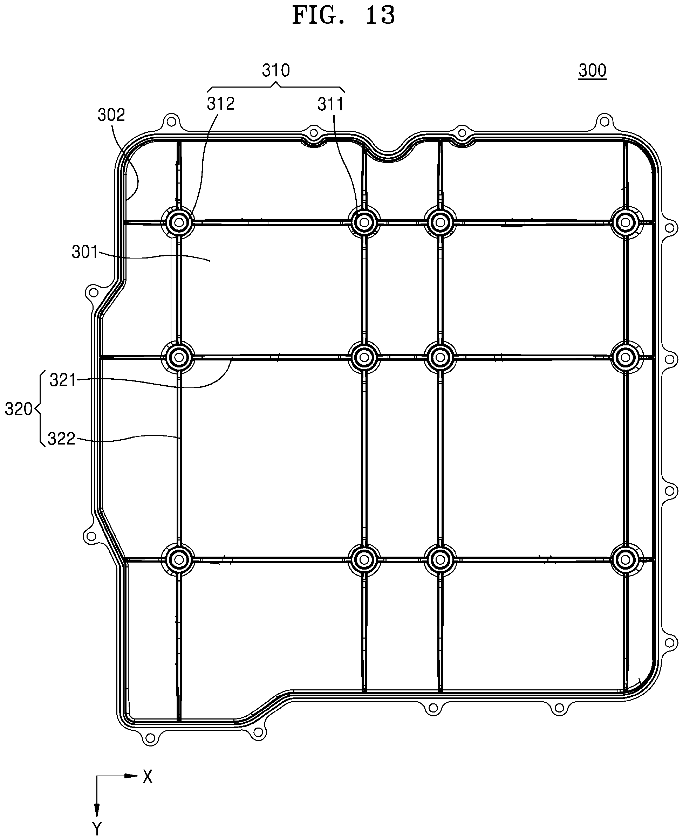

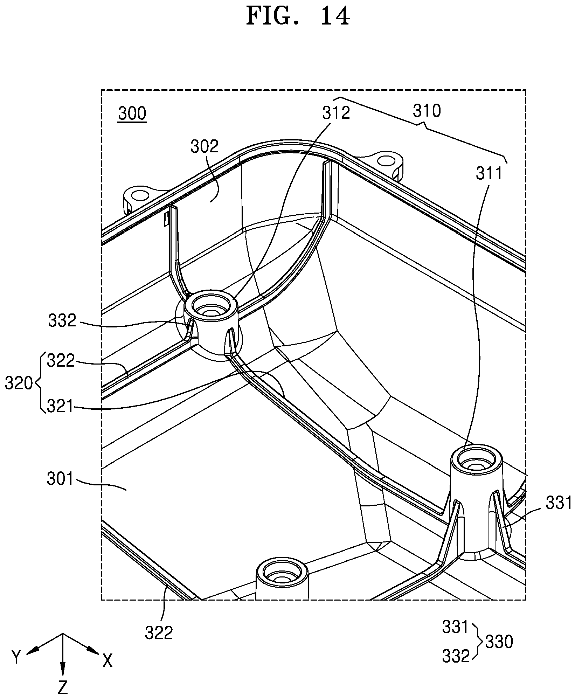

FIG. 8 shows another enlarged portion of FIG. 3. FIG. 8 shows an enlarged second housing surface 102 of the housing 100 on which a contact protrusion 150 is formed. FIG. 9 shows a state in which the battery module 400 is coupled to the housing 100. FIG. 9 is an enlarged plan view of the surrounding of the contact protrusion 150. FIG. 10 shows another enlarged portion of FIG. 3. FIG. 10 shows an enlarged second housing surface 102 of the housing 100 on which a pocket 160 is formed. FIG. 11 is a plan view of FIG. 10, FIG. 12 shows an inner cover 300 and a battery module 400, FIG. 13 shows an inner surface of the inner cover 300, and FIG. 14 is an enlarge portion of FIG. 13. FIG. 14 shows an enlarged upper left corner portion of FIG. 13.

The battery pack 10 may be applied to large applications such as energy storage systems (ESS) or electric vehicles or small and medium-sized applications such as electric tools or smartphones. The battery pack 10 may be coupled to a different device. In one or more embodiments, the battery pack 10 may be connected to various external devices through an adaptor A. The external device may be electric tools such as a chain saw, a drill, a lawn mower, etc.

The battery pack 10 may be embodied in a form by which users may wear or carry. In one or more embodiments, the battery pack 10 may be a backpack configured to be worn by the user. A connection member such as a string, buckle, or belt may be attached to the battery pack 10 (e.g., the back of the battery pack 10). The user may connect the connection member to the body such as the shoulder, waist, and/or back to carry the battery pack 10 and to connect the battery pack 10 to an external device such as an electric tool, to supply power to external devices. The battery pack 10 may include a handle H for the user to carry around. In FIG. 1, the handle H is illustrated as being on the upper portion of the housing 100, but one or more handles H may be provided in the front surface of the housing 100 (e.g., a surface facing a Z-axis direction of FIG. 1), the rear surface, side surface, bottom surface, or other surfaces of the housing 100.

The battery pack 10 includes the housing 100 and at least one battery module 400 accommodated in the housing 100. The housing 100 includes one or more housing protrusions 110 in the housing 100 and housing ribs 120 extending from the housing protrusion 110 in different directions from each other. The housing rib 120 in any one housing protrusion 110 is apart from each other along a circumferential direction of the housing protrusion 110.

The battery pack 10 may include a housing 100, an external cover 200, an inner cover 300, and a battery module 400.

The housing 100 may retain and/or support other components (e.g., the external cover 200, the inner cover 300, and the battery module 400) of the battery pack 10. The housing 100 may be in the lower portion of the battery pack 10 (e.g., the lower portion in the Z-axis direction of FIG. 1) and the interior thereof may be empty (e.g., the housing 100 may define an open compartment). The battery module 400 may be inside the housing 100. The housing 100 may have a rectangular shape in which the inside is empty and the upper surface is open. However, the shape of the housing 100 is not limited thereto and may vary according to the shape of the battery pack 10 and/or the size and number of the battery module(s) 400.

The housing 100 may include a first housing surface 101 and a second housing surface 102.

The first housing surface 101 may include a bottom surface of the housing 100. In one or more embodiments, as shown in FIG. 3, the first housing surface 101 may correspond to the inner bottom surface of the housing 100 and at least a portion of the housing protrusion 110, the housing rib 120, a mounting guide 130, a contact protrusion 150, and a pocket 160 may be on the first housing surface 101. The battery module 400 may be on the first housing surface 101.

The second housing surface 102 may include a side surface of the housing 100. In one or more embodiments, as shown in FIG. 3, the second housing surface 102 may extend along an edge (e.g., a periphery) of the first housing surface 101 and correspond to an inner side of the housing 100. The second housing surface 102 may extend from an edge of the first housing surface 101 in a height direction (e.g., the Z-axis direction of FIG. 1) and, together with the first housing surface 101, may partition or bound an inner space in which the battery module 400 is arranged. At least a portion of each of the housing rib 120, the mounting guide 130, the contact protrusion 150, and the pocket 160 may be on the second housing surface 102.

The housing 100 may include the housing protrusion 110 and the housing rib 120. In one embodiment, a height of the plurality of housing ribs 120 is less than a height of the housing protrusion 110.

At least one housing protrusion 110 may be in the housing 100 and may support the battery module 400. together with the first housing surface 101, as shown in FIG. 3, a plurality of housing protrusions 110 may be on the first housing surface 101 and may protrude upwards (e.g., Z-axis direction) from the first housing surface 101. The housing protrusion 110 may support the battery module 400 by being in contact with the bottom surface of the battery module 400. The bottom surface of the battery module 400 may be spaced apart by a gap from the first housing surface 101 by the housing protrusion 110, thereby forming a space in which heat generated from the lower portion of the battery module 400 is discharged. The housing protrusion 110 may have a hollow cylinder shape. A portion of the battery module 400 (e.g., a first coupling protrusion 420 as shown in FIG. 6) may be inserted into the housing protrusion 110 and be fixed to the housing 100. The plurality of housing protrusions 110 may be spaced apart from each other and connected to each other through the housing rib 120. The housing protrusion 110 may be connected to at least a portion of the bottom surface of the battery module 400. In one embodiment, the housing protrusion 110 may have a hollow cylindrical shape and may be connected to at least a portion of a bottom surface of the battery module 400.

The housing protrusion 110 may include a first housing boss 111, a second housing boss 112, and a third housing boss 113.
At least one housing boss 111 may be on the first housing surface 100 and be connected to the battery module 400. In one or more embodiments, the first housing boss 111 may include a plurality of first housing bosses 111. A plurality of first housing bosses 111 may correspond to any one battery module 400 and at least a portion of the battery module 400 may be inserted into the first housing boss 111 or at least a portion of the first housing boss 111 may be inserted into the battery module 400 such that the battery module 400 is connected to the first housing boss 111. In one or more embodiments, the first coupling protrusion 420 of the battery module 400 may be inserted into the first housing boss 111. In one or more embodiments, as shown in FIG. 6, the battery module 400 may include the first coupling protrusion 420. The first coupling protrusion 420 may extend downwards (e.g., in the Z-axis direction) from the bottom surface of the battery module 400 and have a cylinder shape. The first coupling protrusion 420 may have a height h2 lower than a height H1 of the first housing boss 111. The height H1 may be a height from the first housing surface 101 to the upper end of the first housing boss 111 and the height h2 may be a height from the bottom surface of the battery module 400 to a lower end of the first coupling protrusion 420. The height H1 may be greater than the height h (see FIG. 4) of the housing rib 120. The first coupling protrusion 420 may have an outer diameter that is the same as or less than an inner diameter of the first housing boss 111 and the first coupling protrusion 420 may be inserted into the first housing boss 111. In one embodiment, the housing protrusion 110 may comprise a first housing boss 111, the first coupling protrusion 420 may be in the first housing boss 111, and a height of the first coupling protrusion 420 is less than a height of the first housing boss 111.

The first housing boss 111 may correspond to a center portion of the battery module 400. In one or more embodiments, as shown in FIG. 3, two first housing bosses 111 may be formed in a width direction (e.g., the X-axis direction of FIG. 3) of the battery module 400 and in the center portion of the battery module 400 (shown in dashed lines). The two first housing bosses 111 may be formed on the same line in a length direction (e.g., the Y-axis direction of FIG. 3) of the housing 100. A plurality of first housing bosses 111 may correspond to each battery module 400. In one or more embodiments, as shown in FIG. 3, two first housing bosses 111 may correspond to each battery module 400 and a total of four first housing bosses 111 may be on the first housing surface 101. However, the number of the first housing boss 111 is not limited to four and may vary according, for example, to the size and shape of the battery module 400 and the battery pack 10.

The first housing boss 111 may be connected to the plurality of housing ribs 120. In one or more embodiments, as shown in FIGS. 3 and 4, the plurality of housing ribs 120 may be connected to the outer circumferential surface of the first housing boss 111. The plurality of housing ribs 120 (e.g., a first housing rib 121, a second housing rib 122, and a third housing rib 123) may be connected along the circumference of the first housing boss 111 at equal or different angular intervals. The plurality of housing ribs 120 may extend radially outward from the center of the first housing boss 111. The radially extending plurality of housing ribs 120 may be connected to another first housing boss 111, a second housing boss 112, and/or a third housing boss 113, or the second housing surface 102. Therefore, the first housing boss 111, the second housing boss 112, and the third housing boss 113 may be connected to each other by a plurality of housing ribs 120, thereby efficiently distributing the weight of the battery module 400 and enhancing the rigidity of the first housing boss 111, the second housing boss 112, and the third housing boss 113.

The first housing boss 111 may be located more toward the inside or interior than the third housing boss 113. In one or more embodiments, the first housing boss 111 may be in an area formed by connecting the plurality of third housing bosses 113. In one or more embodiments, as shown in FIG. 3, two first housing bosses 111 may be inside area A1 and area A2 (e.g., the first area) formed by connecting the plurality of third housing bosses 113 corresponding to each battery module 400. As shown in FIGS. 3 and 5, the area A1 and the area A2 may be virtual areas formed by drawing imaginary lines connecting the plurality of third housing bosses 113 (e.g., six third housing bosses 113) corresponding to any one battery module 400 to the first housing rib 121 and the second housing rib 122, which are connected to each of the third housing bosses 113. The first housing boss 111 corresponding to any one battery module 400 may be inside the first area (area A1 and area A2) that is partitioned with the plurality of third housing bosses 113 and the housing ribs 120 connecting the plurality of third housing bosses 113. In one embodiment, the first housing boss 111 may comprise a plurality of first housing bosses 111, and the plurality of first housing bosses 111 may correspond to a center portion of the battery module 400.

Therefore, the first housing boss 111 may first be connected to the battery module 400 such that the housing 100 is firstly connected to the battery module 400 more toward the inside or the interior than the plurality of third housing bosses 113. In this configuration, a fastening member such as the bolt may fasten the third housing boss 113 to the battery module 400 in the outside of the first housing boss 111, and thus, positions of the housing 100 and the battery module 400 may be easily aligned and the battery module 400 may be stably fastened to the housing 100.

At least one second housing boss 112 may be on the first housing surface 101 and may not be directly connected to the battery module 400. In one or more embodiments, the second housing boss 112 may include a plurality of second housing bosses 112. The first housing boss 111 and the third housing boss 113 may be connected to the battery module 400 by inserting the battery module 400 or by a fastening member, and the second housing boss 112 may not be in contact with the battery module 400. In a configuration in which the battery module 400 is connected to the first housing boss 111 and the third housing boss 113, the second housing boss 112 may be spaced apart by a gap from the bottom surface of the battery module 400. The second housing boss 112 may have the height H2. The height H2 may be less than the height H1 of the first housing boss 111 and less than the height H3 of the third housing boss 113. The height H2 may be greater than the height h of the housing rib 120.

The second housing boss 112 may be in the center portion (or substantially the center portion) of the housing 100. In one embodiment, the second housing boss 112 may be in the center portion of the housing 100 in a width direction of the housing 100. In one or more embodiments, a plurality of second housing bosses 112 may be arranged in the width direction of the housing 100 (e.g., the X-axis direction of FIG. 3) in the center portion (or substantially the center portion) of the housing 100. In one or more embodiments, two second housing bosses 112 may be formed in the center of the housing 100. The two second housing bosses 112 may be arranged on the same line in the length direction (e.g., the Y-axis direction of FIG. 3) of the housing 100. The two second housing bosses 112 may be under any one battery module 400 or the second housing bosses 112 may not overlap the battery module 400. The plurality of second housing bosses 112 may connect the first housing boss 111 to the second housing boss 113, the first housing boss 111, and the second housing boss 113 corresponding to different battery modules 400.

The second housing boss 112 may be located more toward the inside or the interior than the first housing boss 111 and the third housing boss 113. In one or more embodiments, as shown in FIG. 3, two second housing bosses 112 may be inside area A3 (a second area) formed by connecting the plurality of third housing bosses 113. As shown in FIGS. 3 and 5, the area A3 may be a virtual area formed by drawing imaginary lines connecting the plurality of third housing bosses 113 corresponding to different battery modules 400 from each other to the first housing rib 121 and the second housing rib 122, which are connected to each of the third housing bosses 113. The plurality of second housing bosses 112 may be in the second area (area A3) that is partitioned by the plurality of third housing bosses 113 corresponding to an outer longitudinal side of the battery module 400, the plurality of third housing bosses 113 corresponding to the outer longitudinal side of the other battery module 400, and the housing ribs 120 connecting the plurality of third housing bosses 113. In one or more embodiments, the first region (area A1 and area A2) may include a plurality of first areas and the second region (area A3) may be formed between the plurality of first areas and may be respectively in contact with the plurality of first areas. In one or more embodiments, as shown in FIG. 3, a longitudinal side of the area A3 may be in contact with the inner longitudinal side of the area A1 and the other longitudinal side of the area A3 may be in contact with the inner longitudinal side of the area A2.

The second housing boss 112 may be connected to the plurality of housing ribs 120. In one or more embodiments, as shown in FIGS. 3 and 4, the plurality of housing ribs 120 may be connected to the outer circumferential surface of the second housing boss 111. The plurality of housing ribs 120 (e.g., the first housing rib 121, the second housing rib 122, and the third housing rib 123) may be connected to the circumference of the second housing boss 112 at equal or different angular intervals. The plurality of housing ribs 120 may extend radially outward from the center of the second housing boss 112. The radially extending plurality of housing ribs 120 may be connected to another second housing boss 112, the first housing boss 111 and/or the third housing boss 113, or the second housing surface 102. The second housing boss 112 may be connected to the first housing boss 111 and the second housing boss 112 that correspond to different battery modules 400, thereby distributing the load and vibration applied to the first housing boss 111 and the second housing boss 112. In one or more embodiments, the second housing boss 112 may not be directly connected to the battery module 400 and may be connected to the first housing boss 111 and the third housing boss 113 through the housing rib 120. In one or more embodiments, as shown in FIG. 3, the second housing boss 112 may be connected to the first housing boss 111 adjacent thereto by the first housing rib 121 or the second housing boss 112 may be connected to the third housing boss 113 by the third housing rib 123.

The second housing boss 112 may be on the same line as the first housing boss 111. In one or more embodiments, the center portion of the second housing boss 112 may be on an imaginary line extending in the horizontal direction (e.g., the X-axis direction of FIG. 3) from the center portion of the first housing boss 111.

At least one third housing boss 113 may be on the first housing surface 101 and may be connected to the battery module 400. In one or more embodiments, the third housing boss 113 may include a plurality of third housing bosses 113. A plurality of third housing bosses 113 may correspond to any one battery module 400 and at least a portion of the battery module 400 may be inserted into the third housing boss 113 or at least a portion of the third housing boss 113 may be inserted into the battery module 400 such that the battery module 400 is connected to the third housing boss 113. In one or more embodiments, a second fastening hole 430 of the battery module 400 may be inserted into the third housing boss 113. In one or more embodiments, as shown in FIG. 7, the battery module 400 may include the second fastening hole 430 on the bottom surface of the battery module 400 and the second fastening hole 430 may correspond to the third housing boss 113 and the first fastening hole 140 of the housing 100. The first fastening hole 140 may be at the bottom surface of the housing 100 and may be in communication with the third housing boss 113. In a configuration in which the first fastening hole 140 corresponds to the second fastening hole 430, the lower end of the second fastening hole 430 may be inserted into the third housing boss 113. The fastening member, such as the bolt or other fastener, may be inserted from below the first fastening hole 140 such that the housing 100 is coupled to the battery module 400. The third housing boss 113 may have a height H3 from the first housing surface 101 to an upper end of the third housing boss 113. The inner bottom surface of the third housing boss 113 may be above the first housing surface 101 and the lower end of the second fastening hole 430 may be in contact with the inner bottom surface of the third housing boss 113. The third housing boss 113 may have an outer diameter that is the same as or less than an inner diameter of the second fastening hole 430 and the third housing boss 113 may be inserted into the second fastening hole 430.

The third housing boss 113 may correspond to an edge portion of the battery module 400. In one or more embodiments, as shown in FIG. 3, three third housing bosses 113 may be formed to correspond to each edge (e.g., a pair of longitudinal sides) of the battery module 400 (shown in dashed lines). The plurality (e.g., three) of third housing bosses 113 corresponding to any one longitudinal side of the battery module 400 may be on the same imaginary line in the length direction (e.g., the Y-axis direction of FIG. 3) of the housing 100. In one or more embodiments, six third housing bosses 113 may correspond to one battery module 400, and a total of twelve third housing bosses 113 may be on the first housing surface 101. However, the number of the third housing boss 113 is not limited to twelve and may vary, for example, according to the size and shape of the battery module 400 and the battery pack 10.

The third housing boss 113 may be connected to the plurality of housing ribs 120. In one or more embodiments, as shown in FIGS. 3 and 4, the plurality of housing ribs 120 may be connected to the outer circumferential surface of the third housing boss 113. The plurality of housing ribs 120 (e.g., the first housing rib 121, the second housing rib 122, and the third housing rib 123) may be connected along the circumference of the third housing boss 113 at equal or different angular intervals. The plurality of housing ribs 120 may extend radially outward from the center of the third housing boss 113. The radially extending plurality of housing ribs 120 may be connected to another third housing boss 113, the first housing boss 111 and/or the second housing boss 112, or the second housing surface 102. Therefore, the third housing boss 111, the first housing boss 111, and the second housing boss 112 may be connected to each other by a plurality of housing ribs 120, thereby efficiently distributing the weight of the battery module 400 and enhancing the rigidity of the first housing boss 111, the second housing boss 112, and the third housing boss 113.

The third housing boss 113 may be located more to the outside than the first housing boss 111 and the second housing boss 112. In one or more embodiments, as shown in FIG. 3, the first housing boss 111 may be formed in each of the area A1 and the area A2 formed by connecting the plurality of third housing bosses 113 corresponding to each battery module 400 and the plurality of third housing bosses 113 may be formed on the outer edge of the area A1 and the area A2.

The plurality of housing ribs 120 connected to the housing protrusion 110 may extend from different portions of the housing protrusion 110. In one or more embodiments, as shown in FIG. 3, the plurality of housing ribs 120 extending from the outer circumferential surface of any one housing protrusion 110 may extend from different portions of the corresponding housing protrusion 110 and may not overlap or be connected (or at least not directly connected) to adjacent housing ribs 120. Therefore, the impact or vibration transmitted from any one housing rib 120 may be absorbed by the housing protrusion 110 and transmitted to another housing rib 120, thereby increasing the durability of the housing rib 120.

The housing rib 120 may be on the first housing surface 101 and/or the second housing surface 102 and may connect the plurality of housing protrusions 110 together. In one or more embodiments, the plurality of housing ribs 120 may extend along the first housing surface 101 from the circumference of the plurality of housing protrusions 110 and be connected to an adjacent housing protrusion 110. The plurality of housing ribs 120 may cross each other to form a grid pattern or a net pattern. The housing ribs 120 may distribute the load and vibration of the battery module 400 applied to the housing protrusion 110, thereby improving the durability of the housing 100 including the housing protrusion 110.

The housing ribs 120 may be connected to the second housing surface 102. In one or more embodiments, as shown in FIGS. 3 and 4, the housing ribs 120 extending from the housing protrusion 110 adjacent or proximate to the second housing surface 102 of the housing 100 may be connected to the second housing surface 102. Therefore, the load and vibration of the battery module 400 may be distributed through the second housing surface 102 through the housing protrusion 110 and the housing rib 120.

The housing rib 120 may include the first housing rib 121, the second housing rib 122, and the third housing rib 123. In one embodiment, the plurality of housing ribs 120 may comprise a first housing rib 121 extending in a horizontal direction; a second housing rib 122 extending in a vertical direction; and a third housing rib 123 extending in a diagonal direction between the first housing rib 121 and the second housing rib 122.

A plurality of first housing ribs 121 may be on the first housing surface 101 and the second housing surface 102 and may be connected to the housing protrusion 110. In one embodiment, the first housing rib 121, the second housing rib 122, and the third housing rib 123 may be connected to the second housing surface 102.

In one or more embodiments, the first housing rib 121 may extend in the width direction (e.g., the X-axis direction of FIG. 3) of the housing 100 along the first housing surface 101. The first housing rib 121 may connect the first housing boss 111, the second housing boss 112, and the third housing boss 113 to each other in a vertical direction (e.g., the Y-axis direction). The first housing rib 121 may have a height h and the height h may be less than the height H1 of the first housing boss 111, less than the height H2 of the second housing boss 112, and less than the height H3 of the third housing boss 113. The first housing rib 121 may extend from the outer circumferential surface of the first housing boss 111, the second housing boss 112, and the third housing boss 113 and may cross the second housing rib 122. The first housing rib 121 may be connected to the second housing surface 102. In one or more embodiments, as shown in FIGS. 3 and 4, a portion of the first housing rib 121 extending from the first housing boss 111, the second housing boss 112, and the third housing boss 113 may extend along the first housing surface 101 and may contact the second housing surface 102. Therefore, the load and vibration transmitted along the first housing rib 121 may be distributed to the second housing surface 102.

A plurality of second housing ribs 122 may be on the first housing surface 101 and the second housing surface 102 and may be connected to the housing protrusion 110. In one or more embodiments, the second housing rib 122 may extend in the width direction (e.g., the Y-axis direction of FIG. 3) of the housing 100 along the first housing surface 101. The housing rib 122 may connect the first housing boss 111, the second housing boss 112, and the third housing boss 113 to each other in the second direction (e.g., the Y-axis direction of FIG. 3 or a vertical direction). The second housing rib 122 may have the same height h as the first housing rib 121, and the height h may be less than the height H1 of the first housing boss 111, less than the height H2 of the second housing boss 112, and less than the height H3 of the third housing boss 113. The second housing rib 122 may extend from the outer circumferential surface of the first housing boss 111, the second housing boss 112, and the third housing boss 113 and may cross the first housing rib 121 and the third housing rib 123. The second housing rib 122 may be connected to the second housing surface 102. In one or more embodiments, as shown in FIGS. 3 and 4, a portion of the second housing rib 122 extending from the first housing boss 111, the second housing boss 112, and the third housing boss 113 may extend along the first housing surface 101 and contact the second housing surface 102. Therefore, the load and vibration transmitted along the second housing rib 122 may be distributed to the second housing surface 102.

A plurality of third housing ribs 123 may be on the first housing surface 101 and the second housing surface 102 and may be connected to the housing protrusion 110. In one or more embodiments, the third housing rib 123 may extend in a diagonal direction (e.g., a direction between the X-axis and the Y-axis of FIG. 3) of the housing 100 along the first housing surface 101. The third housing rib 123 may connect the first housing boss 111, the second housing boss 112, and the third housing boss 113 to each other in a diagonal direction. The third housing rib 123 may have the same height h as the first housing rib 121, and the height h may be less than the height H1 of the first housing boss 111, less than the height H2 of the second housing boss 112, and less than the height H3 of the third housing boss 113. The third housing rib 123 may extend from the outer circumferential surface of the first housing boss 111, the second housing boss 112, and the third housing boss 113 and may cross the first housing rib 121 and the second housing rib 122. The third housing rib 123 may be connected to the second housing surface 102. In one or more embodiments, as shown in FIGS. 3 and 4, a portion of the third housing rib 123 extending from the first housing boss 111, the second housing boss 112, and the third housing boss 113 may extend along the first housing surface 101 and contact the second housing surface 102. Therefore, the load and vibration transmitted along the third housing rib 123 may be distributed to the second housing surface 102.

The first housing rib 121, the second housing rib 122, and the third housing rib 123 extending from any one housing protrusion 110 may be connected to different portions of the outer circumferential surface of the corresponding housing protrusion 110. In one or more embodiments, as shown in FIG. 3, the first housing rib 121, the second housing rib 122, and the third housing rib 123 may be connected to the outer circumferential surface of the first housing boss 111, the second housing boss 112, and the third housing boss 113, respectively. The first housing rib 121, the second housing rib 122, and the third housing rib 123 extending from any one first housing boss 111, second housing boss 112, and third housing boss 113 may be connected to different portions of the circumferential surface of the corresponding first housing boss 111, the second housing boss 112, and the third housing boss 113. Therefore, the impact or vibration transmitted from the first housing rib 121, the second housing rib 122, and the third housing rib 123 may be absorbed by the housing protrusion 110 and transmitted to another first housing rib 121, another second housing rib 122, and another third housing rib 123, thereby enhancing the durability of the first housing rib 121, the second housing rib 122, and the third housing rib 123.

The housing 100 may further include the mounting guide 130. At least one mounting guide 130 may be on the first housing surface 101 and the second housing surface 102 and the mounting guide 130 may be configured to guide the position to which the battery module 400 is mounted. In one or more embodiments, a plurality of mounting guides 130 may be in the corner portion of the housing 100. In one or more embodiments, as shown in FIGS. 3 and 4, two mounting guides 130 may be on each of the left and right corners of the housing 100. The mounting guide 130 may separate the battery module 400 and the second housing surface 102 such that the corner of the battery module 400 is not in direct contact with the second housing surface 102. The mounting guide 130 may be configured to align the position of the battery module 400 in response to the battery module 400 being coupled to the housing 100.

The housing 100 may further include the contact protrusion 150. At least one contact protrusion 150 may be in the housing 100. In one or more embodiments, as shown in FIGS. 3 and 8, the contact protrusion 150 may be between the first housing surface 101 and the second housing surface 102 and may extend upward (e.g., in the Z-axis direction) along the second housing surface 102 from the first housing surface 101. In one or more embodiments, the contact protrusion 150 may have a height H4. The height H4 may be the same as or less than the height of the second housing surface 102 and may be the same as or less than the height of a busbar 500. The contact protrusion 150 may come into contact with the busbar 500 fastened to the battery module 400 as the battery module 400 is inserted into the housing 100. Therefore, the contact protrusion 150 may closely contact the busbar 500 with the battery module 400, and thus, an additional component for fixing the busbar 500 does not need to be provided in the battery module 400.

The contact protrusion 150 may be between the guide protrusions 450 of the battery module 400. In one or more embodiments, as shown in FIG. 9, the contact protrusion 150 may be between a pair of guide protrusions 450 on a side of the battery module 400 and may press the busbar 500 inserted between the pair of guide protrusions 450. In one or more embodiments, the contact protrusion 150 may be on a horizontal line passing through the center of the connector 600 connecting the busbar 500 to the battery module 400. In one or more embodiments, the connector 600 may include a conductive material such as a metal and may electrically connect a cell tap to the busbar 500. The busbar 500 may have a width W5 and the width W5 may be the same as (or substantially the same as) an interval or distance between the pair of guide protrusions 450.

The contact protrusion 150 may have a tapered shape. In one or more embodiments, the contact protrusion 150 may have a width that narrows in a direction from the bottom to the top (e.g., in the Z-axis direction). In one or more embodiments, as shown in FIG. 8, a width of a lower end of the contact protrusion 150 (e.g., a width of the housing 100 in the length direction or in the Y-axis direction of FIG. 8) may be W4a, a width of an upper end of the contact protrusion 150 may be W4b, and W4b may be less than W4a. The contact protrusion 150 may include a shape in which a surface facing the battery module 400 is inclined. In one or more embodiments, as shown in FIG. 8, the surface of the contact protrusion 150 on the opposite side of the second housing surface 102 may face upwards and be tilted to the inside. Therefore, in response to the battery module 400 being inserted into the housing 100, the bus bar 500 may not interfere with the upper end of the contact protrusion 150 and the battery module 400 may be stably inserted into the housing 100. The lower portion of the contact protrusion 150 may press the busbar 500 to closely contact the busbar 500 with the battery module 400.

The housing 100 may further include the pocket 160. At least one pocket 160 may be formed in the housing 100. In one or more embodiments, as shown in FIGS. 3 and 10, the pocket 160 may be between the first housing surface 101 and the second housing surface 102 and may be on a side of the second housing surface 102 opposite to the second housing surface 102 on which the contact protrusion 150 is located. The pocket 160 may be configured to hold and support the substrate S. The substrate S may be connected to an LED panel exposed to the outside of the housing 100 to display the current state such as a remaining battery, etc. of the battery pack 10.

The pocket 160 may include a barrier rib 161, a stopper 162, a first insertion guide 163, and a second insertion guide 164.

The barrier rib 161 may extend from the first housing surface 101 and the second housing surface 102 and may form a space in which the substrate S is accommodated between the first housing surface 101 and the second housing surface 102. In one or more embodiments, as shown in FIG. 11, the stopper 162 may extend from the second housing surface 102 toward a space between the barrier rib 161 and the second housing surface 102. The stopper 162 may be inside the barrier rib 161 and may be configured to guide the position of the substrate S in response to the substrate S being inserted into the barrier rib 161 such that the substrate S does not collide with the second housing surface 102. In a configuration in which the substrate S is inserted into the barrier rib 161, the stopper 162 may not be in contact with and may be spaced apart from the substrate S. The stopper 162 may be separated from the inner surface of the barrier rib 161, the first insertion guide 163, and the second insertion guide 164.

The first insertion guide 163 and the second insertion guide 164 may be configured to fix the substrate S inside the barrier rib 161. In one or more embodiments, as shown in FIG. 11, at least one first insertion guide 163 and at least one second insertion guide 164 may be on the second housing surface 102 and may extend toward a space between the barrier rib 161 and the second housing surface 102. A pair of first insertion guides 163 may face each other on the inner surfaces of the second housing surface 102 and the barrier rib 161. A separation distance between the first insertion guides 163 on the inner surfaces of the second housing surface 102 and the second insertion guides 164 on the barrier rib 161 may be equal to or greater than a thickness of the substrate S. The substrate S may be inserted and fixed between the first insertion guides 163 formed on the inner surfaces of the second housing surface 102 and the barrier rib 161. In one or more embodiments, as shown in FIG. 11, the first insertion guide 163 may include two pairs of first insertion guides 163.

At least one second insertion guide 164 may be on the second housing surface 102 and may extend towards a space between the barrier rib 161 and the second housing surface 102. In one or more embodiments, the second insertion guide 164 may have the same shape as the first insertion guide 163 on the second housing surface 102. The second insertion guide 164 may be between adjacent first insertion guides 163, and may be in contact with and thereby support the substrate S. The height of the first insertion guide 163 and the second insertion guide 164 may be less than the height of the second housing surface 102. The first insertion guide 163 and the second insertion guide 164 may each be inclined or tapered downwards (e.g., in the Z-axis direction). In one or more embodiments, as shown in FIG. 10, the first insertion guide 163 and the second insertion guide 164 may include an inclined portion that gradually increases in width from the upper end to the lower end and the substrate S may be naturally seated in the barrier rib 161.

The external cover 200 may be on the inner cover 300 to cover the inner cover 300 and may be detachably connected to the housing 100.

The inner cover 300 may be on the housing 100 and cover the open upper surface of the housing 100. In one or more embodiments, as shown in FIG. 2, in a state in which the battery module 400 is accommodated in the housing 100, the inner cover 300 may be on the battery module 400 and connected to the housing 100 and the battery module 400 through the fastening member, such as a bolt.

The inner cover 300 may include a first cover surface 301 and a second cover surface 302.

The first cover surface 301 may include an upper surface of the inner cover 300 (in an embodiment in which the external cover 200 is the upper side). In one or more embodiments, as shown in FIGS. 13 and 14, the first cover surface 301 may correspond to the inner upper surface of the inner cover 300 and may face the battery module 400. The cover protrusion 310, the cover rib 320, and the wing portion 330 may be formed on the first cover surface 301.

The second cover surface 302 may include a side surface of the inner cover 300. In one or more embodiments, as shown in FIGS. 13 and 14, the second cover surface 302 may extend along an edge of the first cover surface 301 and may correspond to an inner side of the inner cover 300. The second cover surface 302 may extend in the height direction (e.g., the Z-axis direction of FIG. 14) from the edge of the first cover surface 301. The cover protrusion 310, the cover rib 320, and the wing portion 330 may be on the second cover surface 302.

The inner cover 300 may include the cover protrusion 310 and the cover rib 320.

At least one cover protrusion 310 may be on the first cover surface 301 and the second cover surface 302 and the cover protrusion 310 may be connected to the battery module 400. In one or more embodiments, the cover protrusion 310 may extend in the height direction (e.g., the Z-axis direction of FIG. 14) from the first cover surface 301 and the second cover surface 302 and may be in communication with an outer upper surface of the inner cover 300. In one or more embodiments, as shown in FIG. 12, in a state in which the inner cover 300 is aligned such that the cover protrusion 310 corresponds to the second coupling protrusion 440, the second coupling protrusion 440 may be inserted into the cover protrusion 310 or the cover protrusion 310 may be inserted into the second coupling protrusion 440. The cover protrusion 310 may be fastened to the second coupling protrusion 440 by inserting the fastening member, such as the bolt or other fastener, from the outer upper surface of the inner cover 300 into the cover protrusion 310.

The cover protrusion 310 may include a first cover boss 311 and a second cover boss 312.

At least one first cover boss 311 may be on the first cover surface 301 and connected to the second coupling protrusion 440 of the battery module 400. In one or more embodiments, as shown in FIG. 13, a plurality of first cover bosses 311 may be inside the inner cover 300 in the width direction (e.g., the X-axis direction of FIG. 13) of the inner cover 300 and may be coupled to respective ones of the second coupling protrusions 440. In one or more embodiments, the plurality of first cover bosses 311 may be arranged in two columns in the length direction (e.g., the Y-axis direction of FIG. 13) of the inner cover 300 and the first cover bosses 311 included in each column may be connected to different battery modules 400. In one or more embodiments, the first cover bosses 311 included in each column may be respectively coupled to the second coupling protrusions 440 on the inner longitudinal side of different battery modules 400. The first cover boss 311 may have a hollow cylinder shape. An end of the first cover boss 311 may be inserted into the second coupling protrusion 440 or may surround the second coupling protrusion 440 and the other end of the first cover boss 311 may be in communication with the outer upper surface of the inner cover 300.

The first cover boss 311 may be connected to a plurality of cover ribs 120. In one or more embodiments, a plurality of cover ribs 320 may extend from the outer circumferential surface of the first cover boss 311. In one or more embodiments, as shown in FIG. 14, the plurality of cover ribs 320 (e.g., the first cover rib 321 and the second cover rib 322) may be arranged at equal intervals (or substantially equal intervals) along the outer circumferential surface of the first cover boss 311. In one or more embodiments, the plurality of cover ribs 320 (e.g., four cover ribs 320) may extend in different directions from each other by an angle of approximately 90 degrees from the outer circumferential surface of the first cover boss 311. The first cover bosses 311 may be respectively connected to each other by the cover ribs 320. Therefore, the load and vibration applied to the first cover boss 311 may be distributed through the cover rib 320.

At least one second cover boss 312 may be on the second cover surface 302 and be connected to the second coupling protrusion 440 of the battery module 400. In one or more embodiments, as shown in FIG. 13, a plurality of second cover bosses 312 may be outside the inner cover 300 in the width direction (e.g., the X-axis direction of FIG. 13) of the inner cover 300 and be respectively coupled to the second coupling protrusions 440. In one or more embodiments, the plurality of second cover bosses 312 may be arranged in two columns in the length direction (e.g., the Y-axis direction of FIG. 13) of the inner cover 300 and the second cover bosses 312 included in each column may be connected to different battery modules 400. In one or more embodiments, the second cover bosses 312 included in each column may be respectively coupled to the second coupling protrusions 440 on the outer longitudinal side of different battery modules 400. The second cover boss 312 may have a hollow cylinder shape. An end of the second cover boss 312 may be inserted into the second coupling protrusion 440 or may surround the second coupling protrusion 440 and the other end of the second cover boss 312 may be in communication with the outer upper surface of the inner cover 300.

The second cover boss 312 may be connected to the plurality of cover ribs 320. In one or more embodiments, the plurality of cover ribs 320 may extend from the outer circumferential surface of the second cover boss 312. In one or more embodiments, as shown in FIG. 14, the plurality of cover ribs 320 (e.g., the first cover rib 321 and the second cover rib 322) may be arranged at equal intervals (or substantially equal intervals) along the outer circumferential surface of the second cover boss 312. In one or more embodiments, the plurality of cover ribs 320 (e.g., four cover ribs 320) may extend in different directions from each other by an angle of approximately 90 degrees from the outer circumferential surface of the second cover boss 312. The second cover bosses 312 may be connected to each other by the cover ribs 320. Therefore, the load and vibration applied to the second cover boss 312 may be distributed through the cover rib 320.

The plurality of cover ribs 320 connected to the cover protrusion 310 may extend from different portions of the cover protrusion 310. In one or more embodiments, as shown in FIG. 13, the plurality of cover ribs 320 extending from the outer circumferential surface of any one cover protrusion 310 may extend from different portions of the corresponding cover protrusion 310 and may not overlap or be connected to (or at least connected directly to) adjacent cover ribs 320. Therefore, the impact or vibration transmitted from any one cover rib 320 may be absorbed by the cover protrusion 310 and transmitted to another cover rib 320, thereby increasing the durability of the cover rib 320.

The cover rib 320 may be on the first cover surface 301 and/or the second cover surface 302 and may connect the plurality of cover protrusions 310 to each other. In one or more embodiments, the plurality of cover ribs 320 may extend along the first cover surface 301 and the second cover surface 302 from the circumference of one of the cover protrusions 310 and be connected to an adjacent cover protrusion 310. The plurality of cover ribs 320 may cross each other to form a grid pattern or a net pattern. The cover rib 320 may be configured to distribute a vibration of the battery module 400 applied to the cover protrusion 310 or an external impact of the battery pack 10 to increase the durability of the inner cover 300 including the cover protrusion 310. The torque and impact generated in response to the inner cover 300 being fastened to the battery module 400 may be distributed.

The cover rib 320 may be connected to the second cover surface 302. In one or more embodiments, as shown in FIGS. 13 and 14, the cover rib 120 extending from the cover protrusion 310 adjacent to the second cover surface 302 of the housing 100 may be connected to the second cover surface 302. Therefore, the load and vibration of the battery module 400 may be distributed through the second cover surface 302 through the cover protrusion 310 and the cover rib 320.

The cover rib 320 may include a first cover rib 321 and a second cover rib 322.

A plurality of first cover ribs 321 may be in the first cover surface 301 and the second cover surface 302 and may be connected to the cover protrusion 310. In one or more embodiments, the first cover rib 321 may extend in the width direction (e.g., the Y-axis direction of FIG. 13) of the inner cover 300 along the first cover surface 301. The second cover rib 321 may connect the first cover boss 311 to the second cover boss 312 in a horizontal direction. The first cover rib 321 may extend from the outer circumferential surface of the first cover boss 311 and the second cover boss 312 and may cross the second cover rib 322. The first cover rib 321 may be connected to the second cover surface 302. In one or more embodiments, as shown in FIGS. 13 and 14, a portion of the first cover rib 321 extending from the first cover boss 311 and the second cover boss 312 may extend along the first cover surface 301 and contact the the second cover surface 302. Therefore, the load and vibration transmitted along the first cover rib 321 may be distributed to the second cover surface 302.

A plurality of second cover ribs 322 may be on the first cover surface 301 and the second cover surface 302 and may be connected to the cover protrusion 310. In one or more embodiments, the second cover rib 322 may extend in the length direction (e.g., the Y-axis direction of FIG. 13) of the inner cover 300 along the first cover surface 301. The second cover rib 322 may connect the first cover boss 311 and the second cover boss 312 to each other in a vertical direction (e.g., the Y-axis direction). The second cover rib 322 may extend from the outer circumferential surface of the first cover boss 311 and the second cover boss 312 and may cross the first cover rib 321. The second cover rib 322 may be connected to the second cover surface 302. In one or more embodiments, as shown in FIGS. 13 and 14, a portion of the second cover rib 322 extending from the first cover boss 311 and the second cover boss 312 may extend along the first cover surface 301 and contact the second cover surface 302. Therefore, the load and vibration transmitted along the second cover rib 322 may be distributed to the second cover surface 302.

The first cover rib 321 and the second cover rib 322 extending from any one cover protrusion 310 may be connected to different portions of the outer circumferential surface of the corresponding cover protrusion 310. In one or more embodiments, as shown in FIG. 13, the first cover rib 321 and the second cover rib 322 may be connected to each of the outer circumferential surfaces of the first cover boss 311 and the second cover boss 312. The first cover rib 321 and the second cover rib 322 extending from any one first cover boss 311 and any one second cover boss 312 may be connected to different portions of the outer circumferential surface of the corresponding first cover boss 311 and second cover boss 312. Therefore, the impact or vibration transmitted from any one first cover rib 321 and any one second cover rib 322 may be absorbed by the housing protrusion 110 and transmitted to the first cover rib 321 and the second cover rib 322, thereby enhancing the durability of the first cover rib 321 and the second cover rib 322.

The inner cover 300 may further include the wing portion 330. In one or more embodiments, as shown in FIG. 14, the wing portion 330, in which the cover rib 320 is connected to the cover protrusion 310, may have a greater height than the cover rib 320 and a lower height than the cover protrusion 310. In one or more embodiments, as shown in FIG. 14, the cover rib 320 may be in contact with the outer circumferential surface of the cover protrusion 310 and extend upwards along the height direction (e.g., the Z-axis direction). The wing portion 330 may firmly support a connection portion of the cover rib 320 and the cover protrusion 310, thereby enhancing the durability of the cover protrusion 310 and the cover rib 320.

The wing portion 330 may include a first wing portion 331 and a second wing portion 332. The first wing portion 331 may be on the outer circumferential surface of the first cover boss 311 and the second wing portion 332 may be on the outer circumferential surface of the second cover boss 312. The first wing portion 331 may have a greater height than the second wing portion 332.

The battery module 400 may include at least one battery cell C and at least one battery module 400 may be included in the battery pack 10. In one or more embodiments, the battery module 400 may include a plurality of battery cells C and two battery modules 400 may be included in the housing 100. Each battery module 400 may be connected to the housing protrusion 110 in the housing 100.

The battery module 400 may include an insertion hole 410, a first coupling protrusion 420, a second fastening hole 430, a second coupling protrusion 440, and a guide protrusion 450.

The insertion hole 410 may configured to hold and support the battery cell C and a plurality of insertion holes 410 may correspond to the number of battery cells C. The first coupling protrusion 420 may be on the bottom surface of the battery module 400 and inserted into the first housing boss 111. In one or more embodiments, as shown in FIG. 6, the first coupling protrusion 420 may have a hollow cylinder shape and may have the height h2. The first coupling protrusion 420 may be inserted into the first housing boss 111 to be coupled to the housing 100 and the battery module 400. FIG. 6 shows that the first coupling protrusion 420 is formed under the insertion hole 410, but embodiments are not limited thereto.

The second fastening hole 430 may be in the bottom surface of the battery module 400 to correspond to the first fastening hole 140 of the housing 100. In one or more embodiments, as shown in FIG. 7, the second fastening hole 430 may be inserted into the third housing boss 113. The second fastening hole 430 may have a height corresponding to the height of the inner surface of the third housing boss 113 (e.g., the height from the inner bottom surface of the third housing boss 113 to the upper end of the third housing boss 113). The second fastening hole 430 may be in communication with the first fastening hole 140 and may include a screw thread. Therefore, the fastening member, such as the bolt, inserted through the first fastening hole 140 may be coupled to the inside of the second fastening hole 430.

At least one second coupling protrusion 440 may be on the battery module 400 and connected to the inner cover 300. In one or more embodiments, as shown in FIG. 12, a plurality of second coupling protrusions 440 may correspond to the longitudinal side of each battery module 400. In one or more embodiments, six second coupling protrusions 440 may be in one battery module 400 and three second coupling protrusions 440 may be provided for each longitudinal side of the battery module 400. The second coupling protrusion 440 may correspond to the cover protrusion 310 of the inner cover 300 and may be connected to the cover protrusion 310 through the fastening member, such as the bolt. In one or more embodiments, the second coupling protrusion 440 may have a hollow cylinder shape and may include a screw thread to allow the fastening member to be fastened inside the second coupling protrusion 440.

The guide protrusion 450 may be on the side of the battery module 400 and may fix the busbar 500. In one or more embodiments, as shown in FIG. 9, two guide protrusions 450 may be spaced apart from each other on the side of the battery module 400. The busbar 500 may be inserted between the two guide protrusions 450. In this configuration in which the battery module 400 is seated in the housing 100, the contact protrusion 150 may presses the busbar 500 towards the side surface of the battery module 400, thereby fixing the busbar 500 to the battery module 400.

The battery pack according to the embodiments of the present invention may increase the rigidity of the rib supporting the battery module and distribute the load of the battery module, thereby enhancing the durability and reliability of the battery pack.

It should be understood that embodiments described herein should be considered in a descriptive sense only and not for purposes of limitation. Descriptions of features or aspects within each embodiment should typically be considered as available for other similar features or aspects in other embodiments.

## Claims

1. A battery pack (10) comprising:
a housing (100); and
a battery module (400) accommodated in the housing (100),
wherein the housing (100) comprises:
a housing protrusion (110); and
a plurality of housing ribs (120) extending in different directions from each other from the housing protrusion (110),
wherein the plurality of housing ribs (120) are spaced apart from each other along a circumferential direction of the housing protrusion (110).

2. The battery pack (10) as claimed in claim 1, wherein the housing (100) comprises:
a first housing surface (101) comprising a bottom surface of the housing (100); and
a second housing surface (102) extending along an edge of the first housing surface (101) in a height direction, wherein
each of the plurality of housing ribs (120) is connected to the second housing surface (102).

3. The battery pack (10) as claimed in claim 1 or 2, wherein each of the plurality of housing ribs (120) extending from the housing protrusion (110) is connected to another adjacent housing protrusion (110) of the plurality of housing ribs (120).

4. The battery pack (10) as claimed in any of claims 1 to 3, wherein the housing protrusion (110) has a hollow cylindrical shape and wherein the housing protrusion (110) is connected to at least a portion of a bottom surface of the battery module (400).

5. The battery pack (10) as claimed in claim 4, wherein:
the battery module (400) comprises a first coupling protrusion (420) on the bottom surface of the battery module (400), and
the first coupling protrusion (420) is in the housing protrusion (110).

6. The battery pack (10) as claimed in claim 5, wherein:
the housing protrusion (110) comprises a first housing boss (111),
the first coupling protrusion (420) is in the first housing boss (111), and
a height of the first coupling protrusion (420) is less than a height of the first housing boss (111).

7. The battery pack (10) as claimed in claim 4, wherein:
the housing comprises a first fastening hole (140) in a bottom surface of the housing (100),
the battery module (400) comprises a second fastening hole (430) in the bottom surface of the battery module (400), the second fastening hole (430) corresponding to the first fastening hole (140), and
the second fastening hole (430) is in the housing protrusion (110).

8. The battery pack (10) as claimed in claim 7, wherein
the housing protrusion (110) comprises a second housing boss (112),
the second fastening hole (430) is in a third housing boss (113), and
a fastening member extends into the second fastening hole (430) through the first fastening hole (140).

9. The battery pack (10) as claimed in any of claims 1 to 8, wherein the housing protrusion (110) comprises:
a first housing boss (111);
a second housing boss (112); and
a third housing boss (113),
wherein the first housing boss (111) and the third housing boss (113) are connected to the battery module (400) and wherein the second housing boss (112) is not connected to the battery module (400).

10. The battery pack (10) as claimed in claim 9, wherein the first housing boss (111) and the third housing boss (113) are in the battery module (400) and wherein the second housing boss (112) is spaced apart from a bottom surface of the battery module (400).

11. The battery pack (10) as claimed in claim 9, wherein
the third housing boss (113) comprises a plurality of third housing bosses (113), and
the plurality of third housing bosses (113) correspond to a longitudinal side of the battery module (400).

12. The battery pack (10) as claimed in claim 9, wherein the first housing boss (111) is inside a first area (A1, A2) partitioned by a plurality of third housing bosses (113) corresponding to the battery modules (400) and wherein the plurality of housing ribs (120) connect the plurality of third housing bosses (113).

13. The battery pack (10) as claimed in claim 12, wherein:
the battery module (400) comprises a plurality of battery modules (400),
the second housing boss (112) comprises a plurality of second housing bosses (112), and
the plurality of second housing bosses (112) connect the first housing boss (111) to the plurality of third housing bosses (113) corresponding to different battery modules (400) of the plurality of battery modules (400).

14. The battery pack (10) as claimed in claim 13, wherein the plurality of second housing bosses (112) are in a second area partitioned by the plurality of third housing bosses (113) corresponding to an outer longitudinal side of any one battery module (400) of the plurality of battery modules (400), wherein the plurality of third housing bosses (113) correspond to an outer longitudinal side of another battery module (400) of the plurality of battery modules (400), and wherein the plurality of housing ribs (120) connect the plurality of third housing bosses (113).

15. The battery pack (10) as claimed in claim 14, wherein:
the first area (A1, A2) comprises a plurality of first areas, and
the second area (A3) is between the plurality of first areas and is in contact with each of the plurality of first areas.
